(19)

**Europäisches Patentamt**
**European Patent Office**
**Office européen des brevets**

(11) **EP 4 526 801 B1**

(12) **EUROPEAN PATENT SPECIFICATION**

(45) Date of publication and mention
of the grant of the patent:
**06.05.2026 Bulletin 2026/19**

(21) Application number: **23728562.2**

(22) Date of filing: **05.05.2023**

(51) International Patent Classification (IPC):
*G06N 3/045* (2023.01)  *G06N 3/09* (2023.01)
*G01S 1/06* (2006.01)  *G01S 1/08* (2006.01)
*G01S 1/70* (2006.01)  *G01S 17/48* (2006.01)
*H04W 64/00* (2009.01)  *H04W 99/00* (2009.01)

(52) Cooperative Patent Classification (CPC):
**G06N 3/045; G06N 3/09;** G01S 5/0252; G06N 3/048

(86) International application number:
**PCT/US2023/066658**

(87) International publication number:
**WO 2023/225444 (23.11.2023 Gazette 2023/47)**

(54) **SPATIAL AREA LAYOUT RECONSTRUCTION BASED ON RADIO FREQUENCY MEASUREMENTS**

REKONSTRUKTION DES RÄUMLICHEN BEREICHSLAYOUTS AUF DER BASIS VON HOCHFREQUENZMESSUNGEN

RECONSTRUCTION DE DISPOSITION DE ZONE SPATIALE SUR LA BASE DE MESURES DE RADIOFRÉQUENCE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **17.05.2022 GR 20220100405**

(43) Date of publication of application:
**26.03.2025 Bulletin 2025/13**

(73) Proprietor: **QUALCOMM INCORPORATED**
San Diego, California 92121-1714 (US)

(72) Inventors:
• **KALATZIS, Dimitrios**
San Diego, California 92121-1714 (US)
• **OREKONDY, Tribhuvanesh**
San Diego, California 92121-1714 (US)
• **ACKERMANN, Hanno**
San Diego, California 92121-1714 (US)
• **KARMANOV, Ilia**
San Diego, California 92121-1714 (US)
• **GHAZVINIAN ZANJANI, Farhad**
San Diego, California 92121-1714 (US)
• **DIJKMAN, Daniel Hendricus Franciscus**
San Diego, California 92121-1714 (US)

• **BEHBOODI, Arash**
San Diego, California 92121-1714 (US)
• **KADAMBI, Shreya**
San Diego, California 92121-1714 (US)
• **PORIKLI, Fatih Murat**
San Diego, California 92121-1714 (US)

(74) Representative: **Reddie & Grose LLP**
The White Chapel Building
10 Whitechapel High Street
London E1 8QS (GB)

(56) References cited:
**WO-A2-2022/047410**

• **DONARSKI ADRIAN ET AL: "Environment Mapping Using Wireless Channel State Information and Deep Learning", 2020 14TH INTERNATIONAL CONFERENCE ON SIGNAL PROCESSING AND COMMUNICATION SYSTEMS (ICSPCS), IEEE, 14 December 2020 (2020-12-14), pages 1 - 9, XP033872074, DOI: 10.1109/ ICSPCS50536.2020.9310056**

EP 4 526 801 B1

**(Cont. next page)**

- **ILIA KARMANOV ET AL: "WiCluster: Passive Indoor 2D/3D Positioning using WiFi without Precise Labels", ARXIV.ORG, CORNELL UNIVERSITY LIBRARY, 201 OLIN LIBRARY CORNELL UNIVERSITY ITHACA, NY 14853, 27 September 2021 (2021-09-27), XP091045871**
- **ZHENYU LIU ET AL: "Multi-Faceted Representation Learning with Hybrid Architecture for Time Series Classification", ARXIV.ORG, CORNELL UNIVERSITY LIBRARY, 201 OLIN LIBRARY CORNELL UNIVERSITY ITHACA, NY 14853, 21 December 2020 (2020-12-21), XP081843587**
- **CHRIS XIAOXUAN LU ET AL: "See Through Smoke: Robust Indoor Mapping with Low-cost mmWave Radar", ARXIV.ORG, CORNELL UNIVERSITY LIBRARY, 201 OLIN LIBRARY CORNELL UNIVERSITY ITHACA, NY 14853, 1 November 2019 (2019-11-01), XP081659213**

**Description**

**INTRODUCTION**

Aspects of the present disclosure relate to using machine learning to estimate the layout of a spatial area based on radio frequency measurements.

In a wireless communications system, information about the layout of a spatial area in which operations are performed and location estimation (e.g., relative to one or more network entities) within the spatial environment may be used for various purposes. For example, layout information and location estimates can be used to aid in identifying various parameters for subsequent transmissions in the wireless communications system, such as identifying one or more directional beams to use in communicating between a network entity (e.g., a base station) and a user equipment, to identify beamforming patterns to apply to allow for directionality in signal processing, and the like. In another example, location estimation can be used to detect entry and exit of devices into different areas (e.g., defined based on a radius from a given device). Layout information and location estimation can be used for many other purposes as well, such as emergency management within the spatial area, spatial management, and the like.

Generally, radio frequency measurements within a spatial area may differ due to various factors within the spatial area. For example, sources of radio frequency interference, such as interfering network entities, may affect radio frequency measurements in some parts of the spatial area. In another example, hard surfaces, such as walls, support columns, or the like may introduce variance, or noise, in radio frequency measurements obtained within the spatial area. Because radio frequency measurements are generally noisy, it may be difficult to accurately estimate the layout of the spatial area based on these radio frequency measurements alone.

The paper "Environment Mapping Using Wireless Channel State Information and Deep Learning" by Adrian Donarski et al; XP033872074, describes the use of wireless Channel State Information (CSI) and deep learning for obtaining situational awareness through environment mapping. Algorithms that permit estimation of interior room dimensions using Single-Input Single-Output (SISO) Channel Input Responses (CIRs) are described.

The paper "WiCluster: Passive Indoor 2D/3D Positioning using WiFi without Precise Labels" by Ilia Karmanov et al; XP091045871, describes machine learning techniques for passive indoor positioning using Radio Frequency (RF) CSI.

The paper "Multi-Faceted Representation Learning with Hybrid Architecture for Time Series Classifiation" by Zhenyu Liu et al; XP081843587, describes a hybrid neural architecture for learning mutli-faceted representations for univariate time series.

The paper "See Through Smoke: Robust Indoor Mapping with Low-cost mmWave Radar" by Chris Xiaoxuan Lu et al; XP081659213, describes the design of a single-chip millimeter wave (mmWave) radar based indoor mapping system targeted towards low-visibility environments to assist in emergency response.

BRIEF SUMMARY

The scope of protection is defined by the scope of the appended claims. Any examples which do not fall within the scope of the claims are not presented as embodiments but as examples which are helpful for understanding the invention.

**BRIEF DESCRIPTION OF THE DRAWINGS**

The appended figures depict example features of certain aspects of the present disclosure and are therefore not to be considered limiting of the scope of this disclosure.

**FIG. 1** illustrates radio frequency measurements in a spatial area and radio frequency measurements captured during traversal of a path in the spatial area.

**FIG. 2** depicts an example representation of a point along a path in a spatial area, according to aspects of the present disclosure.

**FIG. 3** depicts an example pipeline for predicting a layout of a spatial area based on a set of multidimensional samples representing data captured while traversing a path through the spatial area and a set predictor model, according to aspects of the present disclosure.

**FIG. 4** depicts an example of a machine learning model that generates a representation for each sample in a set of multidimensional samples representing data captured while traversing a path through a spatial area, according to aspects of the present disclosure.

**FIG. 5** depicts an example of a machine learning model that generates bounding boxes from representations of multidimensional samples representing data captured while traversing a path through a spatial area, according to aspects of the present disclosure.

**FIG. 6** depicts a transformation of bounding boxes representing different portions of a spatial area into a layout of the spatial area, according to aspects of the present disclosure.

**FIG. 7** depicts an example visual representation of time data used in predicting a layout of a spatial area, according to aspects of the present disclosure.

**FIG. 8** depicts an example of a machine learning model that predicts a layout of a spatial area based on channel state information and a visual representation of time data, according to aspects of the present disclosure.

**FIG. 9** depicts example operations for training a machine learning model to predict a layout of a spatial area based on an input data set of multidimensional samples from the spatial area, according to aspects of the present disclosure.

**FIG. 10** depicts example operations for predicting a layout of a spatial area based on a machine learning model and an input data set of multidimensional samples from the spatial area, according to aspects of the present disclosure.

**FIG. 11** depicts an example implementation of a processing system on which a machine learning model may be trained to predict a layout of a spatial area, according to aspects of the present disclosure.

**FIG. 12** depicts an example implementation of a processing system on which a machine learning model may be used to predict a layout of a spatial area, according to aspects of the present disclosure.

To facilitate understanding, identical reference numerals have been used, where possible, to designate identical elements that are common to the drawings. It is contemplated that elements and features of one aspect may be beneficially incorporated in other aspects without further recitation.

## DETAILED DESCRIPTION

Aspects of the present disclosure provide techniques and apparatus for predicting a layout of a spatial area based on measurements obtained while traversing through the spatial area.

Information about the layout of a spatial area may be used for various tasks. For example, this information can be used to determine how a spatial area is to be used, to generate a virtual reality or extended reality scene in the spatial area, for traffic management within the spatial area, for location prediction, and the like. Location prediction, in turn, may be a powerful tool to aid in varying tasks. For example, active positioning may be used by a wireless device to predict its location in a spatial environment based on signals received from one or more transmitters (e.g., base stations, gNodeBs, etc.) in the spatial environment. Based on the predicted location, the wireless device can then identify parameters to use in wireless communications. For example, location estimation may allow for beamforming or beam selection to be performed in such a manner that maximizes, or at least increases, the strength of signaling received by a device in a wireless communication system (e.g., a UE). In another example, location estimation can be used in passive positioning. In passive positioning, a user equipment can use radio frequency measurements to predict positions of other devices in a spatial environment. Generally, the positions of other devices in a spatial environment can be based on perturbation to wireless signals caused by objects obstructing a direct line-of-sight path between a receiving device and a transmitting device.

Within a spatial environment, a wireless receiver can receive signaling from one or more transmitting devices, such as base stations, access points, relays, or the like. Due to various objects in the spatial environment and the resulting changes to signals caused by these objects (e.g., reflection, attenuation, interference, etc.), measurements, such as channel state information (CSI) measurements, may vary as the receiving device moves within the spatial environment (e.g., as a user of a mobile device moves within the spatial area). Because of the variance (or noise) in signal measurements that exists within a spatial environment, it may be challenging to reconstruct a layout of the spatial area using signal measurements alone. Further, because a path traversed through a spatial area may admit to many different layouts of the spatial area, information about the path alone may not be adequate for the reconstruction of a layout of the spatial area.

Aspects of the present disclosure provide techniques that allow for the use of signal measurements and other information to predict the layout of a spatial environment. Generally, the layout of the spatial area may include information identifying discrete portions of the spatial area (e.g., rooms in a building), openings between different portions of the spatial area (e.g., doorways or other open passageways), and the arrangement of these discrete portions of the spatial area.

Because signal measurements generally provide some information about the spatial area, and because other information such as timing information derived from signal measurements and/or velocity and acceleration of a device that captures radio frequency measurements while traversing a path through a spatial area can also provide information about the spatial area, aspects of the present disclosure allow for the use of data captured along a path traversed through the spatial area in predicting the layout of the spatial environment. Thus, to predict the layout of a spatial area, a subset of the possible points in the spatial area may be sampled, which may reduce the amount of time and data used to predict the layout of the spatial area.

*Example Radio Frequency Measurements in a Spatial Area*

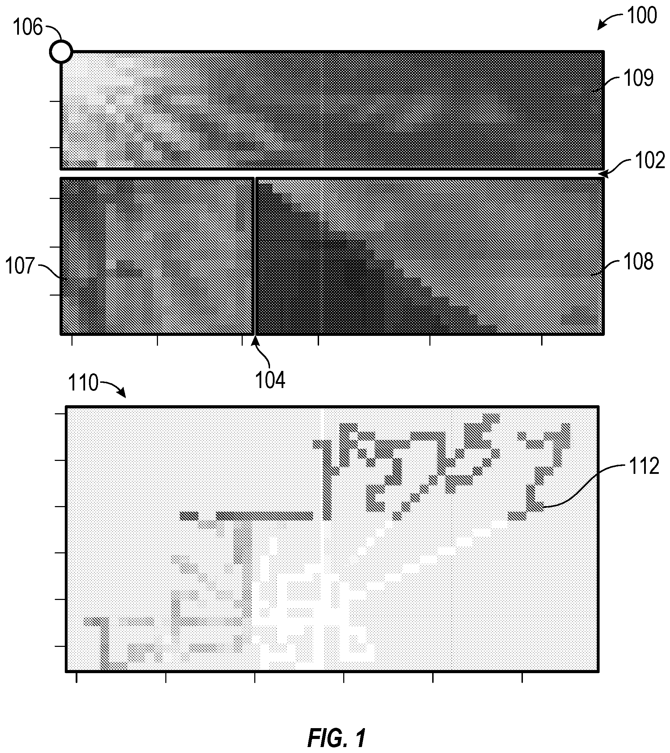

**FIG. 1** illustrates an example of radio frequency measurements in a spatial area and radio frequency measurements captured during traversal of a path 112 in the spatial area.

As illustrated, a measurement map 100 illustrates radio frequency measurements at each point in the spatial area. For simplicity of illustration, the measurement map 100 assumes a spatial area with three rooms separated by walls 102 and 104 and a transmitter 106 located in the upper-left hand corner of the spatial area. However, it should be recognized that a spatial area for which the measurement map 100 can be generated may include any number of contiguous or non-contiguous boundaries (e.g., walls) and any number of transmitters. Within the measurement map 100, signal measurements are strongest in areas that are close to the transmitter 106, as illustrated by the regions of layout having lower luminance values (or darker colors, if in color), and that signal measurements generally become weaker as a function of distance from the transmitter 106, as illustrated by regions having higher luminance values (or lighter colors, if in color). This observation generally comports with the properties of radio communications, in which the received power of a signal decreases as a function of increasing distance from a transmitting device, assuming a clear line-of-sight between a receiving device and the transmitting device.

Further, it may be seen that the walls 102 and 104 may affect the signal measurements captured in different portions of the spatial area represented by the measurement map 100. For example, signal measurements in a first room 107 may be weaker than measurements at the far end (relative to the transmitter 106) of a second room 109 due to signal attenuation caused by the wall 102, even though the distance between any point in the first room 107 and the transmitter 106 may be shorter than the distance between a point at the right side of the second room 109 and the transmitter 106. Similarly, signal measurements in a third room 108 may be weaker than measurements at either the first room 107 or the second room 109 due to signal attenuation caused by the walls 102 and 104 and distance from the transmitter 106. Thus, based on an assumption that a single transmitter 106 exists in the spatial area, the layout of the spatial area can be inferred by examining signal measurements captured within the entirety of a spatial area represented by the measurement map 100 and identifying points in the spatial area at which signal measurements change significantly relative to an origin point associated with this single transmitter 106. The point at which signal measurements change significantly may be indicative of a wall or other boundary separating different portions of the spatial area, while gradual changes in signal measurements may be indicative of increasing distance from the transmitter 106 within the same, unobstructed, portion of the spatial area.

While the radio frequency measurements illustrated in the measurement map 100 generally provide a significant amount of information about the layout of a spatial area from which the measurement map 100 was generated, it may be impractical to obtain a measurement at each location within the spatial area. Rather, a device may generate a measurement map 110 with measurements obtained along a path 112 traversed through the spatial area. As illustrated, the measurements obtained along the path 112 in the measurement map 110 may be a sparse subset of the possible measurements that could be obtained within the spatial area, as illustrated by the measurement map 100. However, the measurements obtained along the path 112 may include additional information that defines how the path 112 was generated. For example, because a device cannot be located in multiple places at the same time, each measurement may be associated with a timestamp indicating when the measurement was obtained. Because each measurement may be associated with a timestamp, the measurements generated along the path 112 may be organized into an ordered set in which the first element in the ordered set corresponds to the earliest measurement (e.g., a measurement at time 0) and the last measurement in the ordered set corresponds to the latest measurement obtained while traversing the path 112. Further, information about the direction of travel, speed, acceleration, and other movement information can be derived from the timing information associated with each measurement captured while traversing the path 112 and/or from one or more sensors at a device that generated these measurements.

It should be noted that the measurements obtained while traversing the path 112 may not include actual position information associated with each measurement. For example, in a building, it may be difficult to obtain precise data from a satellite positioning system (e.g., GPS, GLONASS, GALILEO, etc.) due to an inability to obtain signaling from a sufficient number of satellites. In another example, a mobile device that is gathering these measurements may not have access to external visual data that may aid in locating the user within a spatial area. Thus, the path 112 may represent a traversal through an undefined spatial area defined in terms of timestamps and directional acceleration and velocity information from which a layout of the spatial area can be inferred.

To generate an input data set that can be used to train a machine learning model to predict the layout of a spatial area, as discussed in further detail below, measurements obtained while traversing the path 112 can be transformed into a set of multidimensional samples, with each multidimensional sample in the set representing a discrete measurement obtained while traversing the path 112. To allow for the set of multidimensional samples to represent the measurements obtained while traversing the path 112 and retain information about the order in which these measurements were obtained, a multidimensional sample may thus include information about the measurement, as well as other contextual information associated with the measurement.

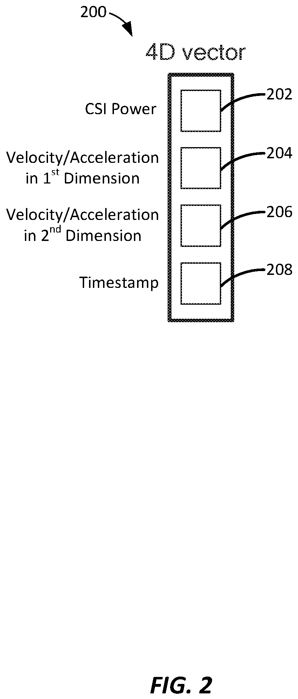

FIG. 2 illustrates an example multidimensional sample 200 representing a measurement obtained at a point along a path in a spatial area, according to aspects of the present disclosure. As illustrated, the multidimensional sample 200 may be a four-dimensional multidimensional sample (e.g., a 4x1 vector) with elements 202, 204, 206, and 208. The element 202 may include the signal measurement obtained at a particular point in the spatial area. This signal measurement may include, for example, a measured signal strength (e.g., in decibels or decibel-milliwatts) a signal-to-noise ratio (SNR), a signal-to-interference-plus-noise ratio (SINR), or other measurements that indicate the strength or quality of a signal obtained at a point along the path in the spatial area. The element 208 may be associated with a timestamp associated with the measurement in the element 202.

The elements 204 and 206, meanwhile, may provide additional contextual information about the motion of the device. For example, the elements 204 and 206 may include two-dimensional velocity and acceleration information. This directional velocity and acceleration information may, for example, be represented by velocity and acceleration information on a first axis (dimension) in the element 204 and velocity and acceleration information on a second axis (dimension) in the element 206. In another example, though not illustrated, the element 204 may include two-dimensional velocity information, and the element 206 may include two-dimensional acceleration information. By including two-dimensional velocity and acceleration information in multidimensional sample 200, the set of multidimensional samples may be used to predict the two-dimensional layout of a spatial area, as discussed in further detail below. Generally, the velocity and acceleration information may be obtained from various sensors on a device, such as accelerometers, gyroscopes, or other motion sensing devices integral with or connected to a device that obtains measurements while traversing a path through a spatial area.

*Example Set Predictor Models for Predicting the Layout of a Spatial Area Based on Multidimensional Samples from the Spatial Area*

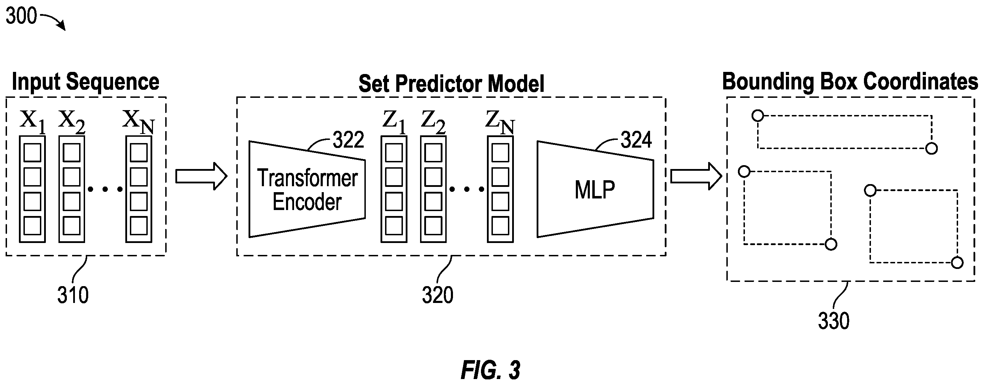

To predict the layout of a spatial area, aspects of the present disclosure use a set of multidimensional data representations (e.g., vectors) representing measurements obtained along a path traversed through a spatial area as an input into a set predictor model which predicts the members of a set of bounding boxes representing a spatial area based on the set of multidimensional data representations. The set predictor model may be trained (as discussed in further detail herein with respect to **FIGs. 3** through **5)** to predict the shapes of bounding boxes (or other bounding polygons or ellipses) defining different portions of a spatial area and may generate the predicted layout of the spatial area by matching the points defining these bounding boxes.

FIG. 3 illustrates an example pipeline 300 for predicting a layout of a spatial area based on a set of multi-dimensional samples representing data captured while traversing a path through a spatial area and a set predictor model, according to aspects of the present disclosure.

Generally, N measurements may be obtained by traversing a path through a spatial area (e.g., the path 112 illustrated in **FIG. 1).** Each measurement may be associated with a specific location in the spatial area and a specific timestamp at which the measurement was taken. From the $N$ measurements, an input sequence 310 may be generated as a set of $N$ multidimensional samples $\{x_1, x_2, ..., x_N\}$, with each sample $x$ being formatted as discussed above with respect to **FIG. 2** in some aspects. The input sequence 310 may be provided as input into a set predictor model 320, and the set predictor model may generate a series of bounding box coordinates 330 (or coordinates for another bounding shape). The bounding box coordinates 330 may include coordinates for each of a plurality of rooms in a spatial area, for example.

As illustrated, the set predictor model 320 includes a first machine learning model 322 and a second machine learning model 324. The first machine learning model 322 generally is trained to map the input sequence 310 into a representation of the input sequence $\{z_1, z_2, ..., z_N\}$. The second machine learning model 324 is trained to use the representation of the input sequence $\{z_1, z_2, ..., z_N\}$ as an input to generate the coordinates of the bounding boxes representing different definable spaces (e.g., rooms) in the spatial area. In some aspects, the first machine learning model 322 may be a transformer encoder machine learning model that encodes the input sequence 310 into a representation of the input sequence, and the second machine learning model 324 may be a multilayer perceptron (MLP) or other neural network that generates the coordinates of the bounding boxes based on the representation of the input sequence generated by the transformer encoder machine learning model.

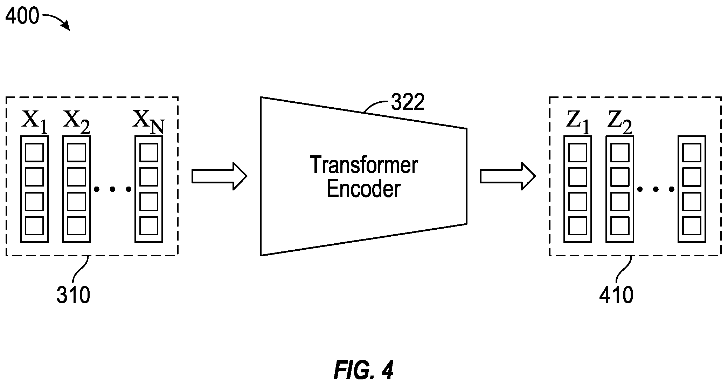

FIG. 4 illustrates an example 400 of generating, using the first machine learning model 322, a representation for each sample in a set of multidimensional samples representing data captured while traversing a path through a spatial area, according to aspects of the present disclosure. As discussed, the first machine learning model 322 may be a transformer encoder model that encodes the input sequence 310 of multidimensional samples representing measurements in a spatial area into an output sequence 410 of the input sequence 310. Generally, the input sequence 310 and the output sequence 410 may include $N$ samples, with each sample in the input sequence 310 of multidimensional samples being mapped to a respective representation in the output sequence 410. That is, the dimensionality and length of the input sequence 310 may be the same as the dimensionality and length of the output sequence 410.

The first machine learning model 322 may be a transformer encoder that is structured as a neural network trained to encode samples in the input sequence 310 to representations, such as a latent space representation, based on correlations between sequences of samples in the input sequence 310. For example, a transformer encoder may include one or more self-attention layers that process different sequences from the set of input sequences and a feed-forward network that applies linear transformations to the input sequence using different parameters in order to encode each multidimensional sample in the input sequence 310 into a respective representation in the output sequence 410, which may be fed as an input into the second machine learning model 324 to generate the bounding boxes (e.g., the bounding box coordinates 330) defining discrete portions of a spatial area and the layout of the spatial area from these bounding boxes.

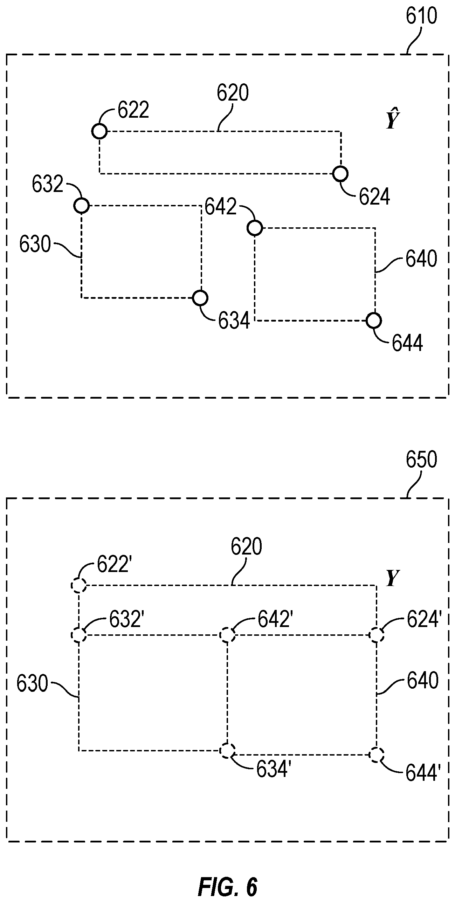

To train the first machine learning model 322, supervised learning techniques may be used. A training data set used to train the first machine learning model 322 may include a set of multidimensional samples representing measurements obtained while traversing a path in a spatial area (e.g., path 112 illustrated in **FIG. 1),** labeled with coordinates defining each of a plurality of bounding boxes for the spatial area. For example, as illustrated in **FIG. 6** and described in further detail below, the bounding boxes may be defined in terms of coordinates of opposing corners of a box (e.g., the upper-left corner and the lower-right corner). In some aspects, where rooms can have a non-rectangular shape, the bounding boxes may be defined in terms of coordinates of each vertex in the room such that an $n$-sided polygon is defined in terms of n coordinates.

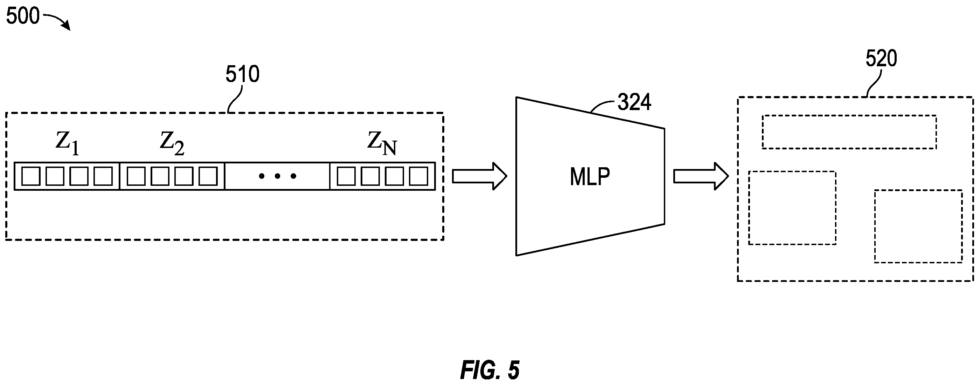

**FIG. 5** illustrates an example 500 of generating bounding boxes from representations of multidimensional samples representing data captured while traversing a path through a spatial area using the second machine learning model 324, according to aspects of the present disclosure. As illustrated, the representations of each sample of the plurality of multidimensional samples in an input data set (e.g., the output sequence 410 illustrated in **FIG. 4)** may be flattened into a vector 510. This vector 510 may have dimensions of 1 by ($n * 4$), and each discrete group of four elements representing a specific sample of the plurality of multidimensional samples, assuming that each sample of the plurality of multidimensional samples has four dimensions (it should be recognized, however, that a multidimensional sample may include fewer dimensions or greater dimensions, and the use of a four-dimensional sample is merely illustrative). That is, elements $(i-1)*4$ through $(i-1)*4+3$, $i \in \{1, ..., n\}$ may be associated with the $i^{th}$ sample of the plurality of multidimensional samples in the input sequence 310. The vector 510 may be input into the second machine learning model 324, which generates a set of bounding boxes 520 representing the different discrete portions (e.g., rooms) in the spatial area.

As discussed, the second machine learning model 324 may be a multilayer perceptron in some aspects, which is generally a neural network with a number of layers that aggregates information globally and maps the representations of the multidimensional samples to the coordinates of bounding boxes in a metric space. The second machine learning model 324 may be trained to generate the bounding boxes and the layout of these bounding boxes, by matching point sets corresponding to the coordinates of the bounding boxes representing different discrete areas of the spatial area.

In some aspects, the second machine learning model may be trained to match point sets corresponding to coordinates of the bounding boxes based on a minimization of a Chamfer distance (serving as a loss function to be minimized) between coordinates of the bounding boxes in order to generate the layout of the spatial area. Generally, this Chamfer distance may be an evaluation metric that evaluates the distance between points in different point clouds (in this example, the distance between the coordinates of the bounding boxes in the set of bounding boxes 520 and the coordinates of the bounding boxes in a candidate layout of the spatial area). Given a set of bounding boxes 520 represented as $\hat{Y}$ and a desired layout of the spatial area represented by Y, the Chamfer distance may be represented by the equation:

$$L\left(\hat{Y}, Y\right) = \sum_i \min_j ||\hat{y}_i - y_j||^2 + \sum_j \min_i ||\hat{y}_i - y_j||^2$$

where $\hat{y}_i$ represents a coordinate of the $i^{th}$ sample in the set of bounding boxes $\hat{Y}$ 520 and $y_j$ represents a coordinate of the $j^{th}$ sample in a layout $Y$ generated by matching the point sets of the bounding boxes in the set of bounding boxes 520. In some aspects, the second model may further be trained to minimize a mean intersection over union (IoU) measurement between the bounding boxes. Generally, a mean IoU measurement may represent the ratio of the area of the boxes over which two bounding boxes intersect (e.g., the area over which the two bounding boxes overlap) to the area of the union of the two bounding boxes (e.g., the total area encompassed by the two bounding boxes). Generally, an IoU measurement approaching 1 may indicate a large amount of overlap between two bounding boxes, while an IoU measurement approaching 0 may indicate a small amount of overlap between two bounding boxes. Because two discrete areas of a spatial area (e.g., two rooms in a building) cannot overlap with each other, minimizing a mean IoU measurement may allow the second machine learning model to predict a layout of the spatial area that constitutes a valid layout of the spatial area.

In some aspects, the second machine learning model may be trained to match point sets corresponding to coordinates of the bounding boxes based on a minimization of a Hungarian loss metric corresponding to coordinates of each bounding box of the plurality of bounding boxes. Generally, the Hungarian loss metric defines the magnitude of a match between different pairs of points (in this example, between the coordinates of the bounding boxes in the set of bounding boxes $\hat{Y}$ 520) such that the second machine learning model 324 optimizes the assignment of inferred bounding box coordinates to ground truth bounding box coordinates. The second machine learning model 324 may further be trained to minimize a mean IoU measurement between the bounding boxes.

**FIG. 6** illustrates a transformation of bounding boxes representing different portions of a spatial area into a layout of the spatial area, according to aspects of the present disclosure. As discussed, the second machine learning model 324 illustrated in **FIG. 3** generates a set of bounding boxes 610 including the bounding boxes 620, 630, and 640. The bounding box 620 is defined in relation to points 622 and 624, representing opposite corners of the bounding box 620. Likewise, the bounding box 630 is defined in relation to points 632 and 634, and the bounding box 640 is defined in relation to points 642 and 644.

Based on the techniques discussed above (e.g., minimization of Chamfer distance, minimization of Hungarian loss, minimization of mean IoU, etc.), the set predictor model 320 illustrated in **FIG. 3** generates a layout 650 by matching point sets for the bounding boxes 620, 630, and 640. In this example, the points defining the bounding box 620 may be translated to points 622' and 624' in a two-dimensional space. Meanwhile, the bounding box 630 may be defined in terms of translated points 632' and 634', with the point 632' being positioned such that the upper-left corner of the bounding box 630 is matched to the lower-left corner of the bounding box 620. Finally, the bounding box 640 may be defined in terms of translated points 642' and 644'. In moving the bounding box 640 to its position in the layout 650, the upper-right corner of the bounding box 640 is matched to the point 624' defining the lower-right corner of the bounding box 620, the upper-left corner of the bounding box 640 defined by the point 642' is matched to the upper-right corner of the bounding box 630, and the lower-left corner of the bounding box 640 is matched to the lower-right corner of the bounding box 630 defined by the point 634'.

In some aspects, a set of multidimensional samples captured by traversing a path in a spatial area may be associated with any one of a plurality of candidate layouts with different sizes of bounding boxes and different layouts of these bounding boxes. Because a set of multidimensional samples may be associated with any one of a plurality of candidate layouts, the set predictor model may be trained as a probabilistic model in which layouts are predicted based on a predicted distribution of layouts in the spatial area for any given input data set. In such a case, the set predictor model can predict the layout of the spatial area in which a set of multidimensional samples are captured based on a joint distribution over the parameters of the set predictor model and the distribution of layouts.

A joint distribution may be defined according to the equation:

$$p(w, D) = p(D|w)p(w)$$

where w represents the model parameters, D represents a distribution over a universe of layouts, $p$ represents a probability, and $p(D|w)$ represents a probability distribution conditioned on a specific set of model parameters. The posterior distribution over the weights of the set predictor model may be represented by the equation:

$$p(w|D) = \frac{p(D|w)p(w)}{\int p(D|w)p(w)dw} = \frac{p(D|w)p(w)}{p(D)}$$

The posterior term, $\int f(w)p(w|D)dw$ may be used to predict which layout of a plurality of layouts is the likely layout for a given input of multidimensional samples captured by traversing a path through an unknown spatial area. However, because finding the true posterior $p(w|D)$ is an intractable problem, an approximate probability distribution $q_\theta(w)$ may be defined, and the posterior distribution may be optimized based on a Kullback-Leibler (KL) divergence measurement of the approximate probability distribution $q_\theta(w)$. In predicting the posterior distribution, a KL divergence measurement may be defined according to the equations:

$$KL[q_\theta(w)||p(w|D)] = \int q_\theta(w) \log \frac{q_\theta(w)}{p(w|D)} \, dw$$

and

$$KL[q_\theta(w)||p(w|D)] = \mathbb{E}_q\left[\log \frac{q_\theta(w)}{p(w)} - \log p(D|w)\right] + \log p(D)$$

Thus, the KL divergence measurement may be represented according to the equation:

$$KL[q_\theta(w)||p(w|D)] = KL[q_\theta(w)||p(w)] - \mathbb{E}_q[\log p(D|w)] + \log p(D)$$

The resulting probability distribution may be made a "peaky" distribution to reduce the level of uncertainty in the prediction of the layout of the spatial area generated by the set predictor model. In some cases, where there is some uncertainty about the appropriate layout for a given path through the spatial area as an input, the resulting probability distribution may be flat or have multiple peaks.

It should be noted that many spatial areas may be laid out with openings in walls that may affect the signal measurements obtained within these spatial areas. For example, while a wall may attenuate a signal, an opening such as a door may provide a clear line of sight for a transmitter to transmit signaling to a receiving device. The set predictor model discussed herein may be trained with data from these environments to predict the layout of such a spatial area, including the openings between different bounding boxes representing doors or other breaks in barriers between discrete portions of a spatial area. To recognize openings in these spatial areas, the machine learning models may be trained using a training data set that includes both points representing vertices of a bounding box defining a room and locations of openings between different discrete portions of the spatial area. Because these openings may not attenuate a signal in the way that a wall or other barrier would attenuate a signal, the model can identify these openings based, at least in part, on identifying a local spike in signal measurements (e.g., a local spike in received power, SNR, SINR, etc.) that is bounded by signal measurements indicating a degraded signal quality (e.g., a decrease in received power, SNR, SINR, etc.) relative to the measurements associated with this local spike.

*Example Transformer Models Predicting the Layout of a Spatial Area Based on Signal Measurement Samples from the Spatial Area*

Generally, a spatial area may include multiple discrete portions (e.g., rooms) and passages (e.g., doors) between different portions of the spatial area. To predict the layout of the spatial area, including these passages between different portions of the spatial area, aspects of the present disclosure can use signal measurements, such as channel state information (CSI) measurements and time data derived therefrom as inputs into a machine learning model that is trained to generate a predicted layout of the spatial area.

Channel state information data may be a complex input including multiple components, such as the sine of phase, cosine of phase, and magnitude components. For a wireless device with four antennas measuring 64 complex subtones from a received signal, each channel state information sample (which includes the aforementioned phase and magnitude components for each antenna and each subtone) may thus result in a $4 \times 64 \times 3$ tensor. While channel state information may generally have a timestamp assigned to it based on a time at which the signals on which the channel state information was generated was received, a mapping from data in the frequency domain to the time domain may include multiple peaks corresponding to the different times of arrival of different multipath components caused by reflection, diffraction, and the like. However, due to bandwidth restrictions and compute capabilities available on hardware, these peaks may be smeared and shifted such that some peaks (corresponding to the time of arrival of some multipath components) are merged with other, more dominant peaks. For example, a signal based on which a channel state information sample is generated may include a line-of-sight component that arrives from the transmitter at a time defined by the line-of-sight distance between the transmitter and the wireless device and the speed of light. However, non-line-of-sight components may randomly shift the time of arrival associated with the signal based on which the channel state information sample is generated; thus, time-of-arrival data may not provide reliable, accurate data which can be used by a machine learning model to predict the layout of the spatial area in which a wireless device operates.

Time difference of arrival (TDoA) data, however, can provide useful information about signals that have arrived at a wireless device, or about the same signal arriving at different antennas at the wireless device. However, because the number of arriving signals can differ between different antennas and because it may be impractical to identify whether a signal is a line-of-sight signal or a multipath component, aspects of the present disclosure derive TDoA data from channel state information samples by computing a set of possible time differences between different multipath components or by using pseudo-TDoA data derived from channel state information samples by computing a set of possible products between different multipath components.

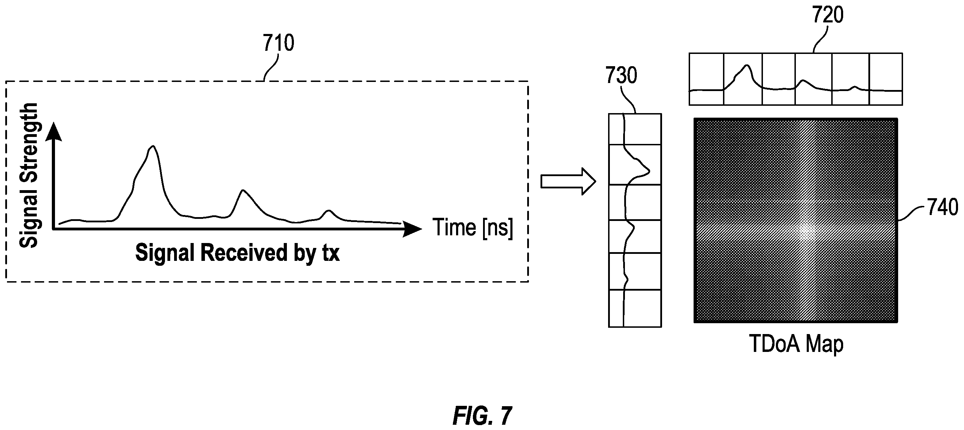

**FIG. 7** illustrates generation of an example visual representation of time data used in predicting a layout of a spatial area, according to aspects of the present disclosure.

To generate a visual representation 740 of TDoA data for a received signal, which may be a visual map or other graphical data representing correlations between a received signal at different antennas of a wireless device, a signal 710 may be transformed into time delay information 720 and 730 based on an inverse Fourier transformation of the signal 710. Generally, signal 710 may be represented by measured signal strength over a window of time, and the time delay information 720 and 730 may be generated as matrices including a plurality of time bins (e.g., a number of bins represented by *num_bins*). In one example, the time delay information 720 may be the result of applying an inverse Fourier transform to the signal 710, and the time delay information 730 may be the result of transposing the time delay information 720 (e.g., rotating the time delay information 720 by 90 degrees, such that a matrix with dimensions of $1 \times num\_bins$ is transformed into a matrix with dimensions of $num\_bins \times 1$).

The visual representation 740 of the TDoA data for the received signal may be generated based on a per-bin combination of the time delay information 720 and the time delay information 730. For example, the visual representation 740 of the TDoA data may be generated by subtracting the time delay information 730 from the time delay information 720 for each bin in the matrices representing the time delay information 720 and the time delay information 730. As illustrated, the resulting visual representation 740 of the TDoA information may be an image structured as a two-dimensional matrix with dimensions of $num\_bins \times num\_bins$ and include information identifying timing correlations between signals received by different antennas at the wireless device. The visual representation 740 may, in some aspects, include a set of values, represented by a high luminance value or a bright color, indicating the likely pseudo-TDoA value for signals received by different antennas at the wireless device.

To generate TDoA data which can be used by a machine learning model to predict the layout of a spatial area, as discussed in further detail herein, TDoA data may be generated as discrete visual representations for each antenna in a wireless device. As a result, for a device with *n* antennas, the visual representations of TDoA information may be a stack of *n* visual representations of TDoA information, with each individual visual representation being associated with a particular one of the n antennas in the wireless device.

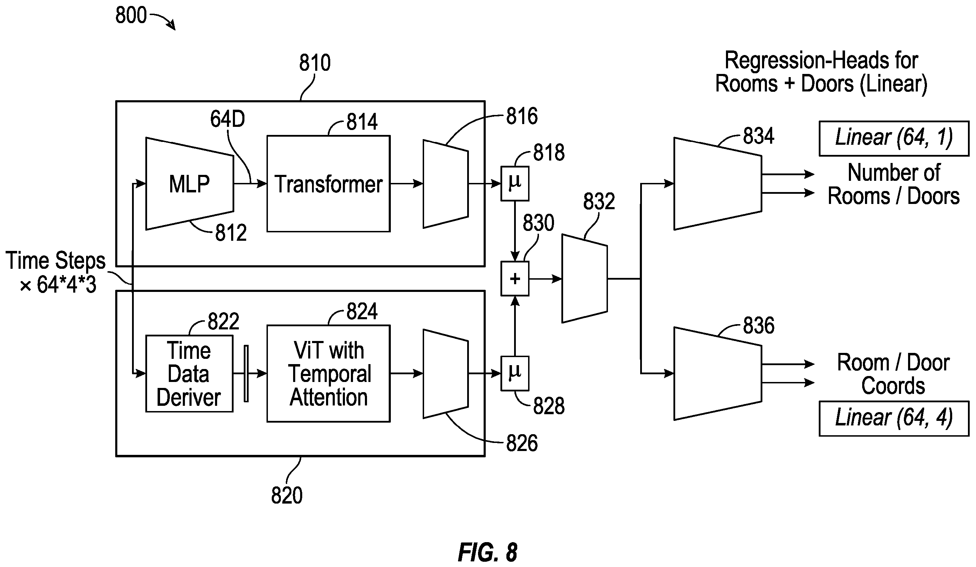

**FIG. 8** depicts an example of a machine learning model 800 that predicts a layout of a spatial area based on channel state information and a visual representation of time data, according to aspects of the present disclosure.

As illustrated, the machine learning model 800 includes a channel state information branch 810 and a temporal information branch 820. The channel state information branch 810 of the machine learning model 800, as illustrated, includes a multilayer perceptron 812, a transformer neural network 814, and an activation function 816 that generates an intermediate output from the channel state information received as input into the machine learning model 800. The multilayer perceptron 812 generally transforms the channel state information input into the machine learning model 800 into a representation in a different dimension. For example, a channel state information sample over 64 subtones using a number of antennas *a* and a number of components c (e.g., 4 antennas and 3 components, as discussed above) may be transformed into a 64-dimensional sample which may be provided as input into a transformer neural network 814.

The transformer neural network 814 may include a plurality of layers and include an activation function, such as a rectified linear unit (ReLU), Gaussian error linear unit (GELU), continuously differential exponential unit (CELU), or the like, to generate a representation of the input channel state information. This generated representation may be fed as input into an activation function 816, which generates a post-activation representation for each sample of the channel state information input into the machine learning model 800.

Meanwhile, the temporal information branch 820 uses the received channel state information to generate an attention output from time data derived from the channel state information. As illustrated, temporal information branch 820 includes a time data deriver 822, a vision transformer neural network 824, and an activation function 826. Generation of the attention output through the vision transformer neural network 824 and activation function 826 may be performed using one or more instances of the vision transformer neural network 824 and activation function 826. To generate this attention output, time data deriver 822 may first generate a plurality of visual representations of time information (e.g., images representing TDoA relationships between different signals) from the channel state information received as input into the machine learning model 800. As discussed, to generate these visual representations of time information from the channel state information, channel state information samples represented as received signal strength over a period of time may be transformed into one-dimensional timing information matrices using an inverse Fourier transform. A generated one-dimensional timing information matrix may be transposed to generate a second timing information matrix, and the generated one-dimensional timing information matrix and the second timing information matrix may be combined in order to generate a two-dimensional visual representation of time data (e.g., TDoA data) for an antenna of a wireless device. Generally, time data deriver 822 may generate a visual representation of time data for each antenna, and thus generate a stack of *a* visual representations of time data for a wireless device with *a* antennas.

A sequence of channel state information data provided as input to machine learning model 800 may thus be represented as a sequence of visual representations of time data for the wireless device. This sequence may be input into the vision transformer neural network 824, which may include temporal attention blocks that are trained to recognize temporal relationships between different components, to generate an output. The attention output generated by the vision transformer neural network 824 may subsequently be fed as input into an activation function 826, which generates an attention output from the time data derived from the channel state information data. The activation function 826, like the activation function 816, may be a Gaussian error linear unit which implements a function that multiplies the input by the cumulative density function of the normal distribution at the input.

Post-activation representations of the channel state information input into the machine learning model 800 generated by the channel state information branch 810 may be averaged at channel state information averaging block 818. The attention output generated by the temporal information branch 820 may be averaged at temporal information averaging block 828 or may be generated based on an input sequence including a special token. The averaged post-activation representations of the channel state information or the output of the channel state information branch 818 based on a combination of the sequence of channel state information and a special vector, and the averaged attention output for the channel state information, may be combined at combiner block 830 and further processed using a global activation layer 832 to generate a post-activation combined representation of the channel state information and time data derived from the channel state information.

The post-activation combined representation may be provided as input into a first regression head 834 that predicts a number of rooms and openings between rooms in the spatial area and a second regression head 836 that predicts the coordinates of the rooms and openings between rooms in the spatial area. The first regression head 834 may be a linear unit trained to generate one-dimensional scalar data from a higher-dimensional post-activation combined representation. The second regression head 836 may also be a linear unit; however, to identify the coordinates of rooms and openings between rooms, the second regression head 836 may generate a plurality of coordinate outputs defining the locations of rooms and the openings between rooms. For example, as discussed above, a room may be defined as a set of points, such as opposite corner points (e.g., top-left and bottom-right points) on a two-dimensional plane for a regular four-sided room (e.g., a room shaped as a rectangle). Similarly, the location of an opening from one room to another room may be defined as a pair of points in a two-dimensional plane. The pair of points may generally be located on, or at least proximate to, a polygon or other shape representing the boundaries of a room.

In some aspects, the predicted layout of the spatial area, defined by the outputs of the first regression head 834 and the second regression head 836, may be further refined in post-processing operations on the outputs. For example, these post-processing outputs may refine the predicted layout of the spatial area by minimizing (or at least reducing) free space in a predicted layout, minimizing (or at least reducing) overlap between rooms, moving openings to borders of rooms, and the like.

*Example Operations for Predicting the Layout of a Spatial Area Based on Samples from the Spatial Area*

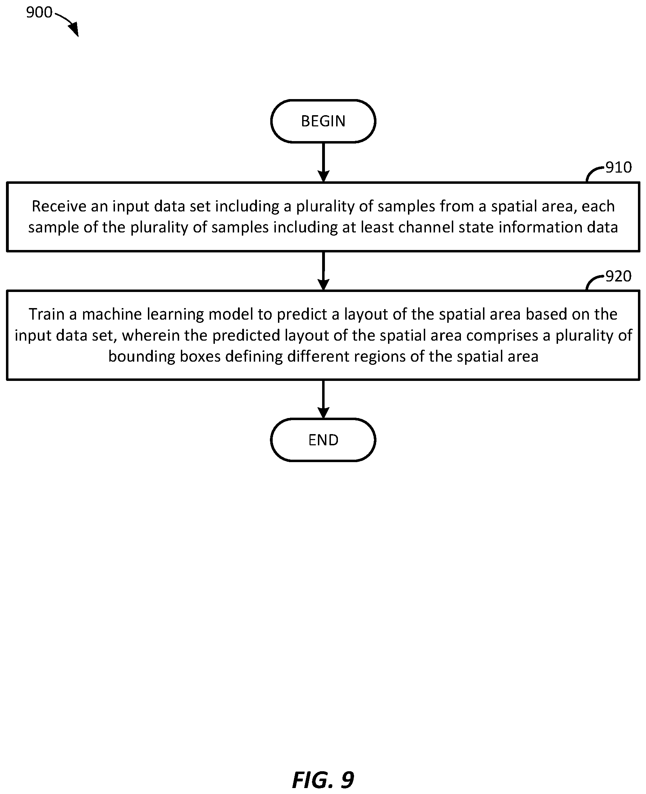

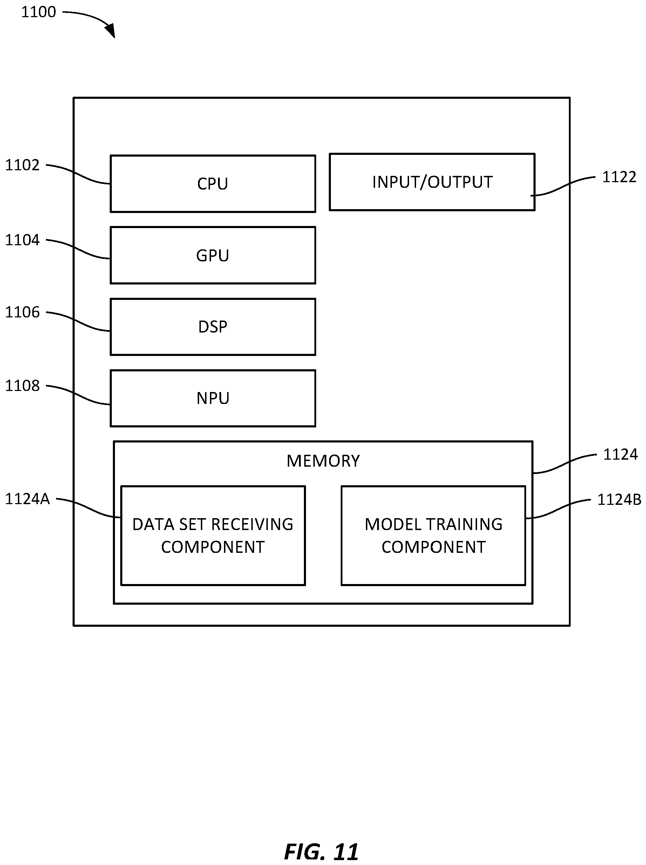

**FIG. 9** illustrates example operations 900 that may be performed by a computing device (e.g., system 1100 illustrated in **FIG. 11**) to train a machine learning model to predict a layout of a spatial area based on an input data set of samples from the spatial area. The computing device may be, for example, a server, a cluster of servers, or other computing device that can use sets of samples and layouts of spatial areas in which these samples are captured to train a machine learning model to predict the layout of a spatial area.

As illustrated, the operations 900 begin at block 910 with receiving an input data set. Generally, the input data set includes a plurality of samples from a spatial area. Each sample includes at least channel state information data. The sample further includes localization data and time data. In some aspects, the channel state information data may include power measurements, such as a measured signal strength (e.g., in decibels or decibel-milliwatts), a calculated SNR, a calculated SINR, or the like at a given location and time in a three-dimensional space. In some aspects, the localization data may include acceleration data and velocity data produced by one or more motion sensors on a device that captures the power measurements, such as accelerometers, gyroscopes, compasses, or other motion or position sensors integral to or coupled with the device. The acceleration data and velocity data may include directional acceleration and velocity for each of a plurality of dimensions. For example, in a two-dimensional mapping scenario, the acceleration and velocity data may include acceleration and velocity data for the forward-backward axis and for the lateral (side-to-side) axis. In a three-dimensional mapping scenario, however, the acceleration and velocity data may include acceleration and velocity data for the forward-backward axis, the lateral axis, and the vertical axis.

At block 920, operations 900 proceed with training a machine learning model to predict a layout of the spatial area based on the input data set. Generally, the predicted layout of the spatial area includes a plurality of bounding boxes defining different regions of the spatial area.

In some aspects, training the machine learning model includes training a first machine learning model (e.g., the channel state information branch 810 illustrated in **FIG. 8)** that generates an intermediate output from the channel state information data and training a second machine learning model (e.g., the temporal information branch 820 illustrated in **FIG. 8)** that generates an attention output from time data derived from the channel state information data.

In some aspects, training the machine learning model may further include training the machine learning model to generate a post-activation combined average based on applying an activation function to a combination of a time-averaged output of the first model and a time-averaged output of the second model.

In some aspects, training the machine learning model may further include training the machine learning model to output information defining the predicted layout of the spatial area based on a plurality of regression heads and the post-activation combined average.

In some aspects, the time data derived from the channel state information may be visual representations of TDoA information for each antenna of a plurality of antennas of a wireless device associated with the channel state information data for each channel state information sample in the input data set. The first machine learning model may be a transformer neural network, and the second machine learning model may include any number of instances of a vision transformer and multi-head attention block that generates the attention output from time data based on the visual representations of TDoA information for each antenna of the plurality of antennas. In some aspects, the visual representations of TDoA information for each antenna of the plurality of antennas may be generated based on an inverse Fourier transform of the channel state information data and a transposed version of the inverse Fourier transform of the channel state information data.

In some aspects, the predicted layout of the spatial area further comprises one or more of a predicted number of regions in the spatial area, a predicted number of openings between regions in the spatial area, predicted coordinates of each region in the spatial area, and predicted coordinates of each opening between regions in the spatial area.

The plurality of samples includes multidimensional samples including the channel state information data, localization data, and time data for each sample in the input data set. Training the machine learning model generally includes training a set predictor model including a first machine learning model and a second machine learning model. The first machine learning model (e.g., the first machine learning model 322 illustrated in **FIG. 3)** is trained to generate a representation of each sample of the plurality of multidimensional samples (e.g., the output sequence 410 illustrated in **FIG. 4,** generated based on the input sequence 310 of multidimensional samples illustrated in **FIG. 3).** The second machine learning model (e.g., the second machine learning model 324 illustrated in **FIG. 3)** is trained to generate bounding boxes for discrete portions of the spatial area and the layout of the spatial area based on the representation of each sample of the plurality of multidimensional samples.

In some aspects, the first model may be a transformer encoder. Training the transformer encoder may include training the transformer encoder to generate, from the input data set, an output sequence that identifies local correlations within sequences of samples in the data set.

In some aspects, training the second machine learning model may include training a model to generate the bounding boxes and a layout of the spatial area from the bounding boxes. Each bounding box may generally be defined as a set of coordinates in a multi-dimensional space.

In some aspects, to generate the layout of the spatial area, training the second machine learning model may further include training the second machine learning model to match point sets corresponding to coordinates of the bounding boxes based on a minimization of a Chamfer distance between coordinates of the bounding boxes. The second model may further be trained to minimize a mean intersection over union (IoU) measurement between the bounding boxes. As discussed, by minimizing a mean IoU measurement between bounding boxes, a layout may be generated that recognizes the physical impossibility of two discrete rooms overlapping with each other in a spatial environment.

In some aspects, training the second machine learning model may further comprise training the second machine learning model to match point sets corresponding to coordinates of the bounding boxes based on a minimization of a Hungarian loss metric. The second machine learning model may further be trained to minimize a mean IoU measurement between the bounding boxes.

In some aspects, training the machine learning model includes training the machine learning model to predict the layout of the spatial area based on a predicted distribution of layouts in the spatial area for the input data set. The set predictor model may be trained to predict the distribution of layouts based on a joint distribution over parameters of the set predictor model and the predicted distribution of layouts. In some aspects, the set predictor model may be trained to predict a posterior distribution over weights of the set predictor model. Because calculating a posterior distribution may be an intractable problem, the posterior distribution may be approximated based on a Kullback-Leibler (KL)-divergence measurement of an approximate probability distribution over the weights of the set predictor model.

In some aspects, the machine learning model may be trained to generate bounding boxes to have non-contiguous coordinates. Generally, these non-contiguous coordinates may represent openings between different discrete portions of a spatial area, such as doors between rooms, open passages between rooms, or the like.

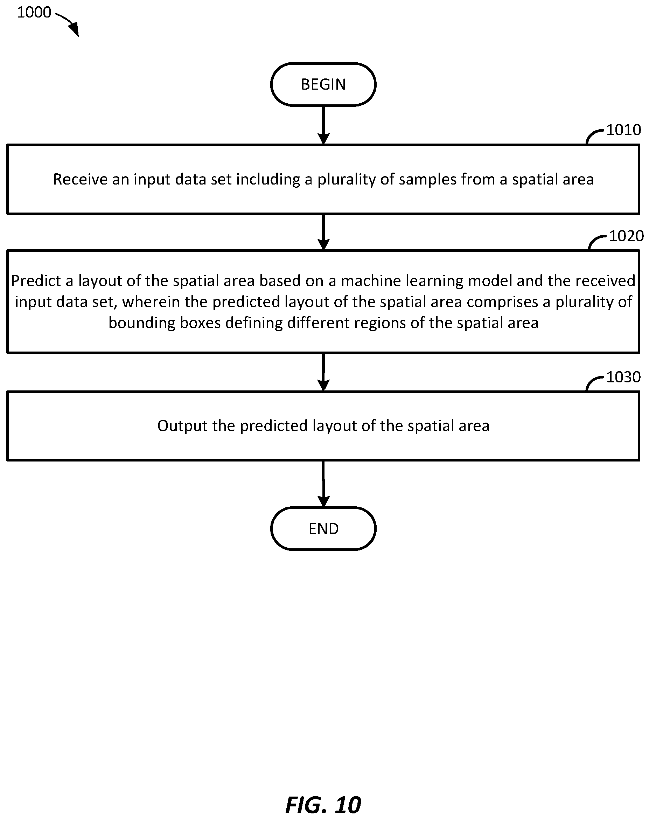

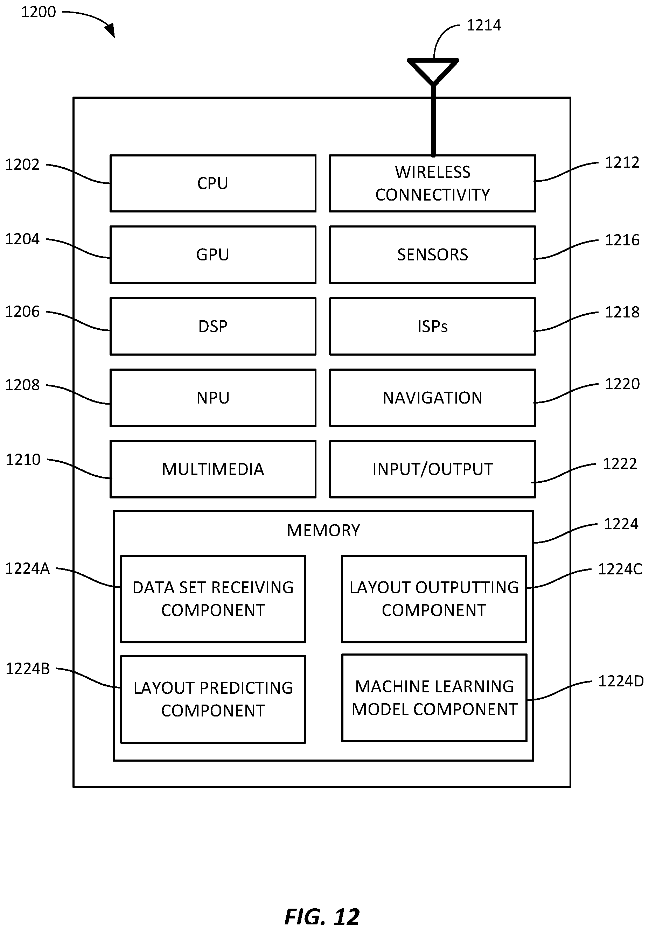

**FIG. 10** illustrates example operations 1000 that may be performed by a computing device (e.g., system 1200 illustrated in **FIG. 12)** to predict a layout of a spatial area based on a machine learning model and an input data set of samples from the spatial area. The computing device may include, for example, a mobile phone, a tablet computer, a laptop computer, or other device that can capture signal measurements from a plurality of locations within a spatial environment and use the signal measurements and motion information to generate multidimensional samples usable by a machine learning model to predict a layout of a spatial area.

As illustrated, the operations 1000 begin at block 1010 with receiving an input data set including a plurality of samples from a spatial area. As discussed, each sample of the plurality of samples from a spatial area generally includes at least channel state information data. Each sample is a multidimensional sample including the channel state information, localization data, and time data. In some aspects, the channel state information data may include power measurements, such as a measured signal strength (e.g., in decibels), a calculated SNR, a calculated SINR, or the like at a given location and time in a three-dimensional space. In some aspects, the localization data may include directional acceleration data and velocity data. The acceleration data and velocity data may include acceleration and velocity for each of a plurality of dimensions. For example, in a two-dimensional mapping scenario, the acceleration and velocity data may include acceleration and velocity data for the forward-backward axis and for the lateral (side-to-side) axis. In a three-dimensional mapping scenario, however, the acceleration and velocity data may include acceleration and velocity data for the forward-backward axis, the lateral axis, and the vertical axis.

Operations 1000 proceed to block 1020 with predicting a layout of the spatial area based on a machine learning model and the received input data set. Generally, the predicted layout of the spatial area includes a plurality of bounding boxes defining different regions of the spatial area.

In some aspects, predicting the layout of the spatial area includes predicting the layout based on an intermediate output generated by a first machine learning model (e.g., channel state information branch 810 illustrated in **FIG. 8)** from the channel state information data and an attention output generated by a second machine learning model (e.g., temporal information branch 820 illustrated in **FIG. 8)** from time data derived from the channel state information data.

In some aspects, predicting the layout of the spatial area further comprises generating a post-activation combined average based on an activation function applied to a combination of a time-averaged output of the first model and a time-averaged output of the second model.

In some aspects, predicting the layout of the spatial area further comprises generating, based on a plurality of regression heads and the post-activation combined average, information defining the predicted layout of the spatial area.

In some aspects, the time data comprises visual representations of time difference of arrival (TDoA) information for each antenna of a plurality of antennas of a wireless device associated with the channel state information data for each channel state information sample in the input data set. The first machine learning model may be a transformer neural network, and the second machine learning model may be a vision transformer that generates the attention output from time data based on the visual representations of TDoA information for each antenna of the plurality of antennas. In some aspects, the visual representations of TDoA information for each antenna of the plurality of antennas may be generated based on an inverse Fourier transform of the channel state information data and a transposed version of the inverse Fourier transform of the channel state information data.

In some aspects, the predicted layout of the spatial area further comprises at least one of a predicted number of regions in the spatial area, a predicted number of openings between regions in the spatial area, predicted coordinates of each region in the spatial area, and predicted coordinates of each opening between regions in the spatial area

In some aspects, predicting the layout of the spatial area comprises generating a representation of each sample of the plurality of samples (e.g., output sequence 410 illustrated in **FIG. 4,** generated based on an input sequence 310 of multidimensional samples illustrated in **FIG. 3)** using a first machine learning model (e.g., first machine learning model 322 illustrated in **FIG. 3)** trained to generate a representation of each sample of the plurality of multidimensional samples. Bounding boxes for discrete portions of the spatial area and the layout of the spatial area may be generated using a second machine learning model (e.g., second machine learning model 324 illustrated in **FIG. 3).**

In some aspects, the first machine learning model may be a transformer encoder. The transformer encoder may be configured to generate, from the input data set, an output sequence with same dimensions as the input data set. This output sequence generally identifies local correlations within sequences of samples in the input data set.

In some aspects, the second machine learning model may be a model configured to generate the bounding boxes and a layout of the spatial area from the bounding boxes. Each bounding box may be defined in terms of a set of coordinates in a multi-dimensional space.

In some aspects, to generate the layout of the spatial area, the second machine learning model may match point sets corresponding to coordinates of the bounding boxes based on a minimization of a Chamfer distance between coordinates of the bounding boxes. The second machine learning model may further minimize a mean IoU measurement between the bounding boxes. As discussed, by minimizing a mean IoU measurement between bounding boxes, a layout may be generated that recognizes the physical impossibility of two discrete rooms overlapping with each other in a spatial environment.

In some aspects, to generate the layout of the spatial area, the second machine learning model may match point sets corresponding to coordinates of the bounding boxes based on a minimization of a Hungarian loss metric. The second model may further be trained to minimize a mean IoU measurement between the bounding boxes.

In some aspects, the second machine learning model is configured to generate the bounding boxes by mapping a representation of each sample of the plurality of multidimensional samples generated by the first machine learning model to coordinates of the bounding boxes.

In some aspects, predicting the layout of the spatial area includes predicting the layout of the spatial area over a plurality of possible layouts for the input data set (e.g., based on a probability distribution over the plurality of possible layouts). As discussed, because a set of multidimensional samples captured by traversing a path through a spatial area may be plausibly associated with a number of different layouts of the spatial area, a probability distribution over the plurality of possible layouts may be used to identify the layout with the highest probability of being associated with the input data set including the plurality of multidimensional samples.

In some aspects, the predicted layout may include a plurality of bounding boxes. At least one bounding box of the plurality of bounding boxes may include non-contiguous coordinates. These non-contiguous coordinates may represent, for example, doors, windows, or other openings between different discrete portions of the spatial area.

Operations 1000 proceed to block 1030, with outputting the predicted layout of the spatial area, such as layout 650 depicted in **FIG. 6.**

*Example Processing Systems for Predicting the Layout of a Spatial Area Based on Samples from the Spatial Area*

**FIG. 11** depicts an example processing system 1100 for training a machine learning models to predict the layout of a spatial area based on samples from the spatial area, such as described herein for example with respect to **FIG. 9.**

The processing system 1100 includes a central processing unit (CPU) 1102, which in some examples may be a multi-core CPU. Instructions executed at the CPU 1102 may be loaded, for example, from a program memory associated with the CPU 1102 or may be loaded from a memory 1124.

The processing system 1100 also includes additional processing components tailored to specific functions, such as a graphics processing unit (GPU) 1104, a digital signal processor (DSP) 1106, a neural processing unit (NPU) 1108, a multimedia processing unit 1110, a wireless connectivity component 1112.

An NPU, such as the NPU 1108, is generally a specialized circuit configured for implementing the control and arithmetic logic for executing machine learning algorithms, such as algorithms for processing artificial neural networks (ANNs), deep neural networks (DNNs), random forests (RFs), and the like. An NPU may sometimes alternatively be referred to as a neural signal processor (NSP), tensor processing unit (TPU), neural network processor (NNP), intelligence processing unit (IPU), vision processing unit (VPU), or graph processing unit.

NPUs, such as the NPU 1108, are configured to accelerate the performance of common machine learning tasks, such as image classification, machine translation, object detection, and various other predictive models. In some examples, a plurality of NPUs may be instantiated on a single chip, such as a system on a chip (SoC), while in other examples the NPUs may be part of a dedicated neural-network accelerator.

NPUs may be optimized for training or inference, or in some cases configured to balance performance between both. For NPUs that are capable of performing both training and inference, the two tasks may still generally be performed independently.

NPUs designed to accelerate training are generally configured to accelerate the optimization of new models, which is a highly compute-intensive operation that involves inputting an existing dataset (often labeled or tagged), iterating over the dataset, and then adjusting model parameters, such as weights and biases, in order to improve model performance. Generally, optimizing based on a wrong prediction involves propagating back through the layers of the model and determining gradients to reduce the prediction error.

NPUs designed to accelerate inference are generally configured to operate on complete models. Such NPUs may thus be configured to input a new piece of data and rapidly process this piece of data through an already trained model to generate a model output (e.g., an inference).

In one implementation, the NPU 1108 is a part of one or more of the CPU 1102, the GPU 1104, and/or the DSP 1106.

In some examples, one or more of the processors of the processing system 1100 may be based on an ARM or RISC-V instruction set.

The processing system 1100 also includes a memory 1124, which is representative of one or more static and/or dynamic memories, such as a dynamic random access memory, a flash-based static memory, and the like. In this example, the memory 1124 includes computer-executable components, which may be executed by one or more of the aforementioned processors of the processing system 1100.

In particular, in this example, the memory 1124 includes a data set receiving component 1124A and a model training component 1124B. The depicted components, and others not depicted, may be configured to perform various aspects of the methods described herein.

Generally, the processing system 1100 and/or components thereof may be configured to perform the methods described herein.

**FIG. 12** depicts an example processing system 1200 for predicting the layout of a spatial area using a machine learning model and an input data set of multidimensional samples, such as described herein for example with respect to **FIG. 10.**

The processing system 1200 includes a central processing unit (CPU) 1202, which in some examples may be a multi-core CPU. The processing system 1200 also includes additional processing components tailored to specific functions, such as a graphics processing unit (GPU) 1204, a digital signal processor (DSP) 1206, and a neural processing unit (NPU) 1208. The CPU 1202, GPU 1204, DSP 1206, and NPU 1208 may be similar to the CPU 1102, GPU 1104, DSP 1106, and NPU 1108 discussed above with respect to **FIG. 11.**

In some examples, the connectivity component 1212 may include subcomponents, for example, for third generation (3G) connectivity, fourth generation (4G) connectivity (e.g., 4G LTE), fifth generation connectivity (e.g., 5G or NR), Wi-Fi connectivity, Bluetooth connectivity, and other wireless data transmission standards. The connectivity component 1212 may be further connected to one or more antennas (not shown).

In some examples, one or more of the processors of the processing system 1200 may be based on an ARM or RISC-V instruction set.

The processing system 1200 also includes a memory 1224, which is representative of one or more static and/or dynamic memories, such as a dynamic random access memory, a flash-based static memory, and the like. In this example, the memory 1224 includes computer-executable components, which may be executed by one or more of the aforementioned processors of the processing system 1200.

In particular, in this example, the memory 1224 includes a data set receiving component 1224A, a layout predicting component 1224B, a layout outputting component 1224C, and a machine learning model component 1224D (such as a machine learning model trained by system 1100 illustrated in **FIG. 11).** The depicted components, and others not depicted, may be configured to perform various aspects of the methods described herein.

Generally, the processing system 1200 and/or components thereof may be configured to perform the methods described herein.

Notably, in other aspects, elements of the processing system 1200 may be omitted, such as where the processing system 1200 is a server computer or the like. For example, the multimedia component 1210, the connectivity component 1212, the sensors 1216, the ISPs 1218, and/or the navigation component 1220 may be omitted in other aspects.

**Claims**

1. A computer-implemented method (900) comprising:

    receiving (910) an input data set including a plurality of multidimensional samples from a spatial area, each sample of the plurality of multidimensional samples including at least radio frequency wireless channel state information data, localization data, and time data; and
    training (920) a machine learning model to predict a layout of the spatial area based on the input data set, wherein the predicted layout of the spatial area comprises a plurality of bounding boxes defining different regions of the spatial area, and wherein training the machine learning model comprises:

        training a first machine learning model to generate a representation of each sample of the plurality of the samples, and
        training a second machine learning model to generate the plurality of bounding boxes for discrete portions of the spatial area based on the representation of each sample of the plurality of samples.

2. The method (900) of Claim 1, wherein:

    the channel state information data comprises power measurements at a given location and time in a three-dimensional space; or
    the localization data comprises acceleration data and velocity data for a wireless device associated with the channel state information data.

3. The method (900) of Claim 1, wherein the predicted layout of the spatial area further comprises one or more of a predicted number of regions in the spatial area, a predicted number of openings between regions in the spatial area, predicted coordinates of each region in the spatial area, and predicted coordinates of each opening between regions in the spatial area.

4. The method (900) of Claim 1, wherein:

the first machine learning model comprises a transformer encoder, and
training the first machine learning model comprises training the transformer encoder to generate, from the input data set, an output sequence that identifies local correlations within sequences of samples in the input data set.

5. The method (900) of Claim 4, wherein training the second machine learning model comprises training the second machine learning model to generate:

the bounding boxes, wherein each bounding box comprises a set of coordinates in a multi-dimensional space; and
a layout of the spatial area from the bounding boxes.

6. The method (900) of Claim 5, wherein training the second machine learning model further comprises training the second machine learning model to match point sets corresponding to the coordinates of the bounding boxes based on a minimization of one or more of a Chamfer distance between the coordinates of the bounding boxes or a Hungarian loss metric corresponding to the coordinates of each bounding box of the plurality of bounding boxes, in order to generate the layout of the spatial area,
optionally wherein training the second machine learning model further comprises training the second machine learning model to minimize a mean intersection over union, IoU, measurement between the bounding boxes.

7. The method (900) of Claim 1, wherein training the machine learning model (920) further comprises:

training the machine learning model to predict the layout of the spatial area based on a predicted distribution of layouts in the spatial area for the input data set; or
training the machine learning model to generate the bounding boxes to have non-contiguous coordinates.

8. The method (900) of Claim 1, wherein training (920) the machine learning model comprises training the machine learning model to predict a distribution of layouts in the spatial area for the input data set based on a joint distribution over parameters of the machine learning model and the predicted distribution of layouts,
optionally wherein training (920) the machine learning model comprises training the machine learning model to predict a posterior distribution over weights of the machine learning model, approximated based on a Kullback-Leibler, KL, -divergence measurement of an approximate probability distribution over the weights.

9. A computer-implemented method (1000) comprising:

receiving (1010) an input data set including a plurality of multidimensional samples from a spatial area, each sample including at least radio frequency wireless channel state information data, localization data, and time data;
predicting (1020) a layout of the spatial area based on a machine learning model and the received input data set, wherein the predicted layout of the spatial area comprises a plurality of bounding boxes defining different regions of the spatial area, and wherein predicting the layout of the spatial area comprises

generating a representation of each sample of the plurality of samples using a first machine learning model; and
generating the bounding boxes for discrete portions of the spatial area and the layout of the spatial area using a second machine learning model and the representation of each sample of the plurality of samples; and

outputting (1030) the predicted layout of the spatial area.

10. The method (1000) of Claim 9, wherein the channel state information data comprises power measurements at a given location and time in a three-dimensional space.

11. The method (1000) of Claim 9, wherein the predicted layout of the spatial area further comprises at least one of a predicted number of regions in the spatial area, a predicted number of openings between regions in the spatial area, predicted coordinates of each region in the spatial area, and predicted coordinates of each opening between regions in the spatial area.

12. The method (1000) of Claim 9, wherein:

the first machine learning model comprises a transformer encoder configured to generate, from the input data set, an output sequence with same dimensions as the input data set that identifies local correlations within sequences of samples in the input data set; and

the second machine learning model is configured to generate:

the bounding boxes, wherein each bounding box comprises a set of coordinates in a multi-dimensional space, and

a layout of the spatial area from the bounding boxes.

13. A non-transitory computer-readable medium comprising instructions that, when executed by one or more processors of a processing system, cause the processing system to perform:

the method (900) of any one of claims 1 to 8;

the method (1000) of any one of claims 9 to 12.

14. A system (1100) comprising:

a memory (1124) having executable instructions stored thereon; and

a processor (1102, 1104, 1106, 1108) configured to execute the executable instructions in order to cause the system to:

receive (910) an input data set including a plurality of multidimensional samples from a spatial area, each sample of the plurality of multidimensional samples including at least radio frequency wireless channel state information data, localization data, and time data; and

train (920) a machine learning model to predict a layout of the spatial area based on the input data set, wherein the predicted layout of the spatial area comprises a plurality of bounding boxes defining different regions of the spatial area, and wherein training the machine learning model comprises:

training a first machine learning model to generate a representation of each sample of the plurality of the samples, and

training a second machine learning model to generate the plurality of bounding boxes for discrete portions of the spatial area based on the representation of each sample of the plurality of samples.

15. A system (1200) comprising:

a memory (1224) having executable instructions stored thereon; and

a processor (1202, 1204, 1206, 1208) configured to execute the executable instructions in order to cause the system to:

receive (1010) an input data set including a plurality of multidimensional samples from a spatial area, each sample including at least radio frequency wireless channel state information data, localization data, and time data;

predict (1020) a layout of the spatial area based on a machine learning model and the received input data set, wherein the predicted layout of the spatial area comprises a plurality of bounding boxes defining different regions of the spatial area, and wherein predicting the layout of the spatial area comprises:

generating a representation of each sample of the plurality of samples using a first machine learning model; and

generating the bounding boxes for discrete portions of the spatial area and the layout of the spatial area using a second machine learning model and the representation of each sample of the plurality of samples; and

output (1030) the predicted layout of the spatial area.

**Patentansprüche**

1. Computerimplementiertes Verfahren (900), das Folgendes beinhaltet:

Empfangen (910) eines Eingangsdatensatzes, der mehrere mehrdimensionale Samples aus einem räumlichen Bereich enthält, wobei jedes der mehreren mehrdimensionalen Samples mindestens Hochfrequenz-Funkkanalzustandsinformationsdaten, Lokalisierungsdaten und Zeitdaten enthält; und

Trainieren (920) eines Machine-Learning-Modells zum Vorhersagen eines Layouts des räumlichen Bereichs auf der Basis des Eingangsdatensatzes, wobei das vorhergesagte Layout des räumlichen Bereichs mehrere Begrenzungsrahmen umfasst, die verschiedene Regionen des räumlichen Bereichs definieren, und wobei das Trainieren des Machine-Learning-Modells Folgendes beinhaltet:

Trainieren eines ersten Machine-Learning-Modells zum Erzeugen einer Darstellung jedes der mehreren Samples, und

Trainieren eines zweiten Machine-Learning-Modells zum Erzeugen der mehreren Begrenzungsrahmen für diskrete Abschnitte des räumlichen Bereichs auf der Basis der Darstellung jedes der mehreren Samples.

2. Verfahren (900) nach Anspruch 1, wobei:

die Kanalzustandsinformationsdaten Leistungsmesswerte an/zu einem/r gegebenen Ort und Zeit in einem dreidimensionalen Raum umfassen; oder

die Lokalisierungsdaten Beschleunigungsdaten und Geschwindigkeitsdaten für ein mit den Kanalzustandsinformationsdaten assoziiertes drahtloses Gerät umfassen.

3. Verfahren (900) nach Anspruch 1, wobei das vorhergesagte Layout des räumlichen Bereichs ferner eines oder mehrere von einer vorhergesagten Anzahl von Regionen im räumlichen Bereich, einer vorhergesagten Anzahl von Öffnungen zwischen Regionen im räumlichen Bereich, vorhergesagten Koordinaten jeder Region im räumlichen Bereich und vorhergesagten Koordinaten jeder Öffnung zwischen Regionen im räumlichen Bereich umfasst.

4. Verfahren (900) nach Anspruch 1, wobei:

das erste Machine-Learning-Modell einen Transformer-Encoder umfasst, und

das Trainieren des ersten Machine-Learning-Modells das Trainieren des Transformer-Encoders zum Erzeugen, aus dem Eingangsdatensatz, einer Ausgangssequenz beinhaltet, die lokale Korrelationen innerhalb von Sequenzen von Samples im Eingangsdatensatz identifiziert.

5. Verfahren (900) nach Anspruch 4, wobei das Trainieren des zweiten Machine-Learning-Modells das Trainieren des zweiten Machine-Learning-Modells beinhaltet zum Erzeugen:

der Begrenzungsrahmen, wobei jeder Begrenzungsrahmen einen Satz von Koordinaten in einem mehrdimensionalen Raum umfasst; und

eines Layouts des räumlichen Bereichs aus den Begrenzungsrahmen.

6. Verfahren (900) nach Anspruch 5, wobei das Trainieren des zweiten Machine-Learning-Modells ferner das Trainieren des zweiten Machine-Learning-Modells zum Abgleichen von Punktsätzen entsprechend den Koordinaten der Begrenzungsrahmen auf der Basis einer Minimierung einer Chamfer-Distanz zwischen den Koordinaten der Begrenzungsrahmen und/oder einer ungarischen Verlustmetrik entsprechend den Koordinaten jedes Begrenzungsrahmens der mehreren Begrenzungsrahmen beinhaltet, um das Layout des räumlichen Bereichs zu erzeugen, wobei das Trainieren des zweiten Machine-Learning-Modells optional ferner das Trainieren des zweiten Machine-Learning-Modells beinhaltet, um einen mittleren IoU-(Intersection over Union)-Messwert zwischen den Begrenzungsrahmen zu minimieren.

7. Verfahren (900) nach Anspruch 1, wobei das Trainieren des Machine-Learning-Modells (920) ferner Folgendes beinhaltet:

Trainieren des Machine-Learning-Modells zum Vorhersagen des Layouts des räumlichen Bereichs auf der Basis einer vorhergesagten Verteilung von Layouts in dem räumlichen Bereich für den Eingangsdatensatz; oder

Trainieren des Machine-Learning-Modells zum Erzeugen der Begrenzungsrahmen, so dass sie nicht zusammenhängende Koordinaten haben.

8. Verfahren (900) nach Anspruch 1, wobei das Trainieren (920) des Machine-Learning-Modells das Trainieren des Machine-Learning-Modells zum Vorhersagen einer Verteilung von Layouts im räumlichen Bereich für den Eingangsdatensatz auf der Basis einer gemeinsamen Verteilung über Parameter des Machine-Learning-Modells und der vorhergesagten Verteilung von Layouts beinhaltet,
wobei optional das Trainieren (920) des Machine-Learning-Modells das Trainieren des Machine-Learning-Modells zum Verhersagen einer posterioren Verteilung über Gewichtungen des Machine-Learning-Modells approximiert auf der Basis eines KL-(Kullback-Leibler)-Divergenzmesswerts einer approximativen Wahrscheinlichkeitsverteilung über die Gewichtungen beinhaltet.

9. Computerimplementiertes Verfahren (1000), das Folgendes beinhaltet:

Empfangen (1010) eines Eingangsdatensatzes, der mehrere mehrdimensionale Samples aus einem räumlichen Bereich enthält, wobei jedes Sample mindestens Hochfrequenz-Funkkanalzustandsinformationsdaten, Lokalisierungsdaten und Zeitdaten enthält;
Vorhersagen (1020) eines Layouts des räumlichen Bereichs auf der Basis eines Machine-Learning-Modells und des empfangenen Eingangsdatensatzes, wobei das vorhergesagte Layout des räumlichen Bereichs mehrere Begrenzungsrahmen umfasst, die verschiedene Regionen des räumlichen Bereichs definieren, und wobei das Vorhersagen des Layouts des räumlichen Bereichs Folgendes beinhaltet:

Erzeugen einer Darstellung jedes der mehreren Samples mit Hilfe eines ersten Machine-Learning-Modells; und
Erzeugen der Begrenzungsrahmen für diskrete Abschnitte des räumlichen Bereichs und des Layouts des räumlichen Bereichs mit Hilfe eines zweiten Machine-Learning-Modells und der Darstellung jedes der mehreren Samples; und

Ausgeben (1030) des vorhergesagten Layouts des räumlichen Bereichs.

10. Verfahren (1000) nach Anspruch 9, wobei die Kanalzustandsinformationsdaten Leistungsmesswerte an/zu einem/r bestimmten Ort und Zeit in einem dreidimensionalen Raum umfassen.

11. Verfahren (1000) nach Anspruch 9, wobei das vorhergesagte Layout des räumlichen Bereichs ferner mindestens eines von einer vorhergesagten Anzahl von Regionen im räumlichen Bereich, einer vorhergesagten Anzahl von Öffnungen zwischen Regionen im räumlichen Bereich, vorhergesagten Koordinaten jeder Region im räumlichen Bereich und vorhergesagten Koordinaten jeder Öffnung zwischen Regionen im räumlichen Bereich umfasst.

12. Verfahren (1000) nach Anspruch 9, wobei:

das erste Machine-Learning-Modell einen Transformer-Encoder umfasst, der zum Erzeugen, aus dem Eingangsdatensatz, einer Ausgangssequenz mit denselben Dimensionen wie der Eingangsdatensatz konfiguriert ist, die lokale Korrelationen innerhalb von Sequenzen von Samples im Eingangsdatensatz identifiziert; und
das zweite Machine-Learning-Modell konfiguriert ist zum Erzeugen:

der Begrenzungsrahmen, wobei jeder Begrenzungsrahmen einen Satz von Koordinaten in einem mehrdimensionalen Raum umfasst, und
eines Layouts des räumlichen Bereichs aus den Begrenzungsrahmen.

13. Nichtflüchtiges, computerlesbares Medium, das Befehle umfasst, die bei Ausführung durch einen oder mehrere Prozessoren eines Verarbeitungssystems das Verarbeitungssystem veranlassen zum Durchführen:

des Verfahrens (900) nach einem der Ansprüche 1 bis 8;
des Verfahrens (1000) nach einem der Ansprüche 9 bis 12.

14. System (1100), das Folgendes umfasst:

einen Speicher (1124), auf dem ausführbare Befehle gespeichert sind; und
einen Prozessor (1102, 1104, 1106, 1108), konfiguriert zum Ausführen der ausführbaren Befehle, um das System zu veranlassen zum:

Empfangen (910) eines Eingangsdatensatzes, der mehrere mehrdimensionale Samples aus einem räumlichen Bereich enthält, wobei jedes der mehreren mehrdimensionalen Samples mindestens Hochfrequenz-Funkkanalzustandsinformationsdaten, Lokalisierungsdaten und Zeitdaten enthält; und

Trainieren (920) eines Machine-Learning-Modells zum Vorhersagen eines Layouts des räumlichen Bereichs auf der Basis des Eingangsdatensatzes, wobei das vorhergesagte Layout des räumlichen Bereichs mehrere Begrenzungsrahmen umfasst, die verschiedene Regionen des räumlichen Bereichs definieren, und wobei das Trainieren des Machine-Learning-Modells Folgendes beinhaltet:

Trainieren eines ersten Machine-Learning-Modells zum Erzeugen einer Darstellung jedes der mehreren Samples, und

Trainieren eines zweiten Machine-Learning-Modells zum Erzeugen der mehreren Begrenzungsrahmen für diskrete Abschnitte des räumlichen Bereichs auf der Basis der Darstellung jedes der mehreren Samples.

15. System (1200), das Folgendes umfasst:

einen Speicher (1224), auf dem ausführbare Befehle gespeichert sind; und

einen Prozessor (1202, 1204, 1206, 1208), konfiguriert zum Ausführen der ausführbaren Befehle zum Veranlassen des Systems zum:

Empfangen (1010) eines Eingangsdatensatzes, der mehrere mehrdimensionale Samples aus einem räumlichen Bereich enthält, wobei jedes Sample mindestens Hochfrequenz-Funkkanalzustandsinformationsdaten, Lokalisierungsdaten und Zeitdaten enthält;

Vorhersagen (1020) eines Layouts des räumlichen Bereichs auf der Basis eines Machine-Learning-Modells und des empfangenen Eingangsdatensatzes, wobei das vorhergesagte Layout des räumlichen Bereichs mehrere Begrenzungsrahmen umfasst, die verschiedene Regionen des räumlichen Bereichs definieren, und wobei das Vorhersagen des Layouts des räumlichen Bereichs Folgendes beinhaltet:

Erzeugen einer Darstellung jedes der mehreren Samples mit Hilfe eines ersten Machine-Learning-Modells; und

Erzeugen der Begrenzungsrahmen für diskrete Abschnitte des räumlichen Bereichs und des Layouts des räumlichen Bereichs mit Hilfe eines zweiten Machine-Learning-Modells und der Darstellung jedes der mehreren Samples; und

Ausgeben (1030) des vorhergesagten Layouts des räumlichen Bereichs.

**Revendications**

1. Procédé implémenté par ordinateur (900) comprenant :

la réception (910) d'un ensemble de données d'entrée comportant une pluralité d'échantillons multidimensionnels provenant d'une zone spatiale, chaque échantillon de la pluralité d'échantillons multidimensionnels comportant au moins des données d'informations d'état de canal sans fil de fréquence radio, des données de localisation et des données temporelles ; et

l'entraînement (920) d'un modèle d'apprentissage automatique pour prédire un agencement de la zone spatiale sur la base de l'ensemble de données d'entrée, dans lequel l'agencement prédit de la zone spatiale comprend une pluralité de boîtes englobantes définissant différentes régions de la zone spatiale, et dans lequel l'entraînement du modèle d'apprentissage automatique comprend :

l'entraînement d'un premier modèle d'apprentissage automatique pour générer une représentation de chaque échantillon de la pluralité d'échantillons, et

l'entraînement d'un second modèle d'apprentissage automatique pour générer la pluralité de boîtes englobantes pour des parties discrètes de la zone spatiale sur la base de la représentation de chaque échantillon de la pluralité d'échantillons.

2. Procédé (900) selon la revendication 1, dans lequel :

les données d'informations d'état de canal comprennent des mesures de puissance à un emplacement et un temps donnés dans un espace tridimensionnel ; ou

les données de localisation comprennent des données d'accélération et des données de vitesse d'un dispositif sans fil associées aux données d'informations d'état de canal.

3. Procédé (900) selon la revendication 1, dans lequel l'agencement prédit de la zone spatiale comprend en outre un ou plusieurs d'un nombre prédit de régions dans la zone spatiale, d'un nombre prédit d'ouvertures entre des régions dans la zone spatiale, de coordonnées prédites de chaque région dans la zone spatiale, et de coordonnées prédites de chaque ouverture entre des régions dans la zone spatiale.

4. Procédé (900) selon la revendication 1, dans lequel :

   le premier modèle d'apprentissage automatique comprend un encodeur transformateur, et
   l'entraînement du premier modèle d'apprentissage automatique comprend l'entraînement de l'encodeur transformateur pour générer, à partir de l'ensemble de données d'entrée, une séquence de sortie qui identifie des corrélations locales dans des séquences d'échantillons dans l'ensemble de données d'entrée.

5. Procédé (900) selon la revendication 4, dans lequel l'entraînement du second modèle d'apprentissage automatique comprend l'entraînement du second modèle d'apprentissage automatique pour générer :

   les boîtes englobantes, dans lequel chaque boîte englobante comprend un ensemble de coordonnées dans un espace multidimensionnel ; et
   un agencement de la zone spatiale à partir des boîtes englobantes.

6. Procédé (900) selon la revendication 5, dans lequel l'entraînement du second modèle d'apprentissage automatique comprend en outre l'entraînement du second modèle d'apprentissage automatique pour faire correspondre des ensembles de points correspondant aux coordonnées des boîtes englobantes sur la base d'une minimisation d'une ou plusieurs d'une distance de Chamfer entre les coordonnées des boîtes englobantes ou d'une métrique de perte hongroise correspondant aux coordonnées de chaque boîte englobante de la pluralité des boîtes englobantes, afin de générer l'agencement de la zone spatiale,
   éventuellement, dans lequel l'entraînement du second modèle d'apprentissage automatique comprend en outre l'entraînement du second modèle d'apprentissage automatique pour minimiser une mesure d'intersection sur l'union, IOU, moyenne entre les boîtes englobantes.

7. Procédé (900) selon la revendication 1, dans lequel l'entraînement du modèle d'apprentissage automatique (920) comprend en outre :

   l'entraînement du modèle d'apprentissage automatique pour prédire l'agencement de la zone spatiale sur la base d'une distribution prédite d'agencements dans la zone spatiale pour l'ensemble de données d'entrée ; ou
   l'entraînement du modèle d'apprentissage automatique pour générer les boîtes englobantes avec des coordonnées non contiguës.

8. Procédé (900) selon la revendication 1, dans lequel l'entraînement (920) du modèle d'apprentissage automatique comprend l'entraînement du modèle d'apprentissage automatique pour prédire une distribution d'agencements dans la zone spatiale pour l'ensemble de données d'entrée sur la base d'une distribution conjointe sur des paramètres du modèle d'apprentissage automatique et la distribution prédite d'agencements,
   éventuellement dans lequel l'entraînement (920) du modèle d'apprentissage automatique comprend l'entraînement du modèle d'apprentissage automatique pour prédire une distribution postérieure sur des poids du modèle d'apprentissage automatique, approximée sur la base d'une mesure de divergence de Kullback-Leibler, KL, d'une distribution de probabilité approximative sur les poids.

9. Procédé implémenté par ordinateur (1000) comprenant :

   la réception (1010) d'un ensemble de données d'entrée comportant une pluralité d'échantillons multidimensionnels provenant d'une zone spatiale, chaque échantillon comportant au moins des données d'informations d'état de canal sans fil de fréquence radio, des données de localisation et des données temporelles ;
   la prédiction (1020) d'un agencement de la zone spatiale sur la base d'un modèle d'apprentissage automatique et de l'ensemble de données d'entrée reçu, dans lequel l'agencement prédit de la zone spatiale comprend une pluralité de boîtes englobantes définissant différentes régions de la zone spatiale, et dans lequel la prédiction de l'agencement de la zone spatiale comprend

la génération d'une représentation de chaque échantillon de la pluralité d'échantillons à l'aide d'un premier modèle d'apprentissage automatique ; et

la génération des boîtes englobantes pour des parties discrètes de la zone spatiale et l'agencement de la zone spatiale à l'aide d'un second modèle d'apprentissage automatique et de la représentation de chaque échantillon de la pluralité d'échantillons ; et

la délivrance en sortie (1030) de l'agencement prédit de la zone spatiale.

10. Procédé (900) selon la revendication 9, dans lequel les données d'informations d'état de canal comprennent des mesures de puissance à un emplacement et un temps donnés dans un espace tridimensionnel.

11. Procédé (900) selon la revendication 9, dans lequel l'agencement prédit de la zone spatiale comprend en outre au moins un d'un nombre prédit de régions dans la zone spatiale, d'un nombre prédit d'ouvertures entre des régions de la zone spatiale, de coordonnées prédites de chaque région dans la zone spatiale, et de coordonnées prédites de chaque ouverture entre des régions dans la zone spatiale.

12. Procédé (900) selon la revendication 9, dans lequel :

le premier modèle d'apprentissage automatique comprend un encodeur transformateur configuré pour générer, à partir de l'ensemble de données d'entrée, une séquence de sortie avec les mêmes dimensions que l'ensemble de données d'entrée qui identifie des corrélations locales au sein de séquences d'échantillons dans l'ensemble de données d'entrée ; et

le second modèle d'apprentissage automatique est configuré pour générer :

les boîtes englobantes, dans lequel chaque boîte englobante comprend un ensemble de coordonnées dans un espace multidimensionnel, et

un agencement de la zone spatiale à partir des boîtes englobantes.

13. Support non transitoire lisible par ordinateur comprenant des instructions qui, une fois exécutées par un ou plusieurs processeurs d'un système de traitement, amènent le système de traitement à réaliser :

le procédé (900) selon l'une quelconque des revendications 1 à 8 ;

le procédé (1000) selon l'une quelconque des revendications 9 à 12.

14. Système (1100) comprenant :

une mémoire (1124) stockant des instructions exécutables ; et

un processeur (1102, 1104, 1106, 1108) configuré pour exécuter les instructions exécutables afin d'amener le système à :

recevoir (910) un ensemble de données d'entrée comportant une pluralité d'échantillons multidimensionnels provenant d'une zone spatiale, chaque échantillon de la pluralité d'échantillons multidimensionnels comportant au moins des données d'informations d'état de canal sans fil de fréquence radio, des données de localisation et des données temporelles ; et

entraîner (920) un modèle d'apprentissage automatique pour prédire un agencement de la zone spatiale sur la base de l'ensemble de données d'entrée, dans lequel l'agencement prédit de la zone spatiale comprend une pluralité de boîtes englobantes définissant différentes régions de la zone spatiale, et dans lequel l'entraînement du modèle d'apprentissage automatique comprend :

l'entraînement d'un premier modèle d'apprentissage automatique pour générer une représentation de chaque échantillon de la pluralité d'échantillons, et

l'entraînement d'un second modèle d'apprentissage automatique pour générer la pluralité de boîtes englobantes pour des parties discrètes de la zone spatiale sur la base de la représentation de chaque échantillon de la pluralité d'échantillons.

15. Système (1200) comprenant :

une mémoire (1224) stockant des instructions exécutables ; et

un processeur (1202, 1204, 1206, 1208) configuré pour exécuter les instructions exécutables afin d'amener le système à :

recevoir (1010) un ensemble de données d'entrée comportant une pluralité d'échantillons multidimensionnels provenant d'une zone spatiale, chaque échantillon comportant au moins des données d'informations d'état de canal sans fil de fréquence radio, des données de localisation et des données temporelles ;

prédire (1020) un agencement de la zone spatiale sur la base d'un modèle d'apprentissage automatique et de l'ensemble de données d'entrée reçu, dans lequel l'agencement prédit de la zone spatiale comprend une pluralité de boîtes englobantes définissant différentes régions de la zone spatiale, et dans lequel la prédiction de l'agencement de la zone spatiale comprend

la génération d'une représentation de chaque échantillon de la pluralité d'échantillons à l'aide d'un premier modèle d'apprentissage automatique ; et

la génération des boîtes englobantes pour des parties discrètes de la zone spatiale et l'agencement de la zone spatiale à l'aide d'un second modèle d'apprentissage automatique et de la représentation de chaque échantillon de la pluralité d'échantillons ; et

délivrer en sortie (1030) l'agencement prédit de la zone spatiale.

**FIG. 1**

**FIG. 2**

**Input Sequence**

$X_1$ $X_2$ $X_N$

310

**Set Predictor Model**

322

Transformer Encoder

$Z_1$ $Z_2$ $Z_N$

324

MLP

320

**Bounding Box Coordinates**

330

*FIG. 3*

EP 4 526 801 B1

EP 4 526 801 B1

400

$X_1$ $X_2$ $X_N$

Transformer Encoder
322

$Z_1$ $Z_2$

310

410

**FIG. 4**

500

510

$Z_1$  $Z_2$  $Z_N$

· · ·

324

MLP

520

EP 4 526 801 B1

**FIG. 5**

**FIG. 6**

**FIG. 7**

Regression-Heads for Rooms + Doors (Linear)

*Linear (64, 1)* — Number of Rooms / Doors — 834

Room / Door Coords — *Linear (64, 4)* — 836

832

816, 818 — μ

830 — +

828, 826 — μ

810 — MLP — 812 — 64D — Transformer — 814

820 — Time Data Deriver — 822 — ViT with Temporal Attention — 824

Time Steps × 64*4*3

800

*FIG. 8*

900

BEGIN

910

Receive an input data set including a plurality of samples from a spatial area, each sample of the plurality of samples including at least channel state information data

920

Train a machine learning model to predict a layout of the spatial area based on the input data set, wherein the predicted layout of the spatial area comprises a plurality of bounding boxes defining different regions of the spatial area

END

*FIG. 9*

1000

BEGIN

1010

Receive an input data set including a plurality of samples from a spatial area

1020

Predict a layout of the spatial area based on a machine learning model and the received input data set, wherein the predicted layout of the spatial area comprises a plurality of bounding boxes defining different regions of the spatial area

1030

Output the predicted layout of the spatial area

END

*FIG. 10*

1100

CPU — 1102

GPU — 1104

DSP — 1106

NPU — 1108

INPUT/OUTPUT — 1122

MEMORY — 1124

DATA SET RECEIVING COMPONENT — 1124A

MODEL TRAINING COMPONENT — 1124B

*FIG. 11*

1200

1214

1202 — CPU

1212 — WIRELESS CONNECTIVITY

1204 — GPU

1216 — SENSORS

1206 — DSP

1218 — ISPs

1208 — NPU

1220 — NAVIGATION

1210 — MULTIMEDIA

1222 — INPUT/OUTPUT

1224 — MEMORY

1224A — DATA SET RECEIVING COMPONENT

1224C — LAYOUT OUTPUTTING COMPONENT

1224B — LAYOUT PREDICTING COMPONENT

1224D — MACHINE LEARNING MODEL COMPONENT

**FIG. 12**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ADRIAN DONARSKI et al.** *Environment Mapping Using Wireless Channel State Information and Deep Learning*
- **ILIA KARMANOV et al.** *WiCluster: Passive Indoor 2D/3D Positioning using WiFi without Precise Labels*
- **ZHENYU LIU et al.** *Multi-Faceted Representation Learning with Hybrid Architecture for Time Series Classifiation*
- **CHRIS XIAOXUAN LU et al.** *See Through Smoke: Robust Indoor Mapping with Low-cost mmWave Radar*